# EUROPÄISCHE PATENTANMELDUNG

(11) **EP 1 067 422 A2**
(43) Veröffentlichungstag der Anmeldung: **10.01.2001**
(21) Anmeldenummer: 00810393.9
(22) Anmeldetag: 08.05.2000
(51) Int. Cl.: G02B 27/14

(54) **Strahlteiler zur Aufspaltung eines Lichtstrahlenbündels in Teilstrahlenbündel**

(30) Priorität: 26.06.1999 DE 19929436
(71) Anmelder: HILTI Aktiengesellschaft, 9494 Schaan (LI)
(72) Erfinder: Waibel, Reinhard, 9442 Berneck (CH); Piske, Wilfried, 9435 Heerbrugg (CH); Bünter, Erwin, 9453 Eicheberg (CH)
(74) Vertreter: Wildi, Roland

(57) **Zusammenfassung**

Ein Strahlteiler zur Aufspaltung eines Lichtstrahlenbündels in Teilstrahlenbündel besitzt eine Anzahl von reflektierenden Flächen (6), die im Strahlengang eines von einer Lichtquelle (1) erzeugten, kollimierten, primären Lichtstrahlenbündels (P) angeordnet sind. Die reflektierenden Flächen (6) sind gegenüber der Ausbreitungsrichtung des primären Lichtstrahlenbündels (P) jeweils um 45° geneigt und spalten das auftreffende primäre Lichtstrahlenbündel (P) unter Erzeugung eines virtuellen kartesischen Achsensystems in senkrecht zueinander verlaufende Teilstrahlenbündel (R) auf. Nach der Erfindung sind wenigstens zwei reflektierende Flächen (6) vorgesehen, die im rechten Winkel zueinander verlaufend, im gleichen Abstand von einem Kollimator (2) angeordnet sind und derart in das primäre Lichtstrahlenbündel (P) ragen, dass für einen Teil (M) des primären Lichtstrahlenbündels (P) ein Strahldurchlass gebildet ist, der im wesentlichen symmetrisch zur optischen Achse des Kollimators (2) liegt.

## Beschreibung

Die Erfindung betrifft einen Strahlteiler zur Aufspaltung eines Lichtstrahlenbündels in Teilstrahlenbündel gemäss dem Oberbegriff des Patentanspruchs 1. Die Erfindung betrifft auch ein optisches Richtgerät, das einen derartigen Strahlteiler enthält.

In der Bauindustrie werden zunehmend die seit langem bekannten mechanischen Einrichtungen, die über eine visuelle Kontrolle eine Ausrichtung und Messung der Lagegenauigkeit von Bauteilen, Einbauten, Installationen und dergleichen mehr ermöglichen, durch optische Einrichtungen ersetzt, die auf der Basis eines lichtstarken, kollimierten Lichtstrahlenbündels beruhen. Seit die Halbleiterindustrie in der Lage ist, in grossen Stückzahlen Laserdioden mit Abstrahlung im sichtbaren Spektrum, üblicherweise in Rot, zur Verfügung zu stellen, sind in der Bauindustrie eine Reihe von Messeinrichtungen bekannt geworden, welche die bis dahin dominierenden mechano-visuellen Vorrichtungen und Verfahren ersetzen und darüber hinaus auch zusätzliche, neue Möglichkeiten der Messung bieten. Beispielsweise haben Richtgeräte eine grosse Akzeptanz gefunden, die zumindest ein kollimiertes Laserstrahlenbündel aussenden, das im Entfernungsbereich bis etwa 20 m einen Durchmesser von maximal etwa 10 mm und eine Abweichung von etwa 1 mm/10 m horizontaler Ausbreitung aufweist. Die horizontale Ausrichtung des Laserstrahlenbündels erfolgt dabei in der Regel selbsttätig durch schwerkraftbeeinflusste Konstruktionen oder Regelkreise.

Neben der horizontalen Ausrichtung und Nivellierung besteht in der Baupraxis vielfach auch die Notwendigkeit ein Lot zu erstellen oder exakt rechte Winkel abzustecken. Dazu ist beispielsweise aus der US-A-5,144,487 ein Laserrichtgerät bekannt, das drei in einer Horizontalebene liegende, rechtwinklig zueinander verlaufende Laserstrahlenbündel emittiert. Zusätzlich emittiert das Gerät noch zwei Lotstrahlen. Zur Erzeugung der horizontalen und lotrechten Laserstrahlenbündel ist innerhalb des Geräts eine Anordung von Spiegeln vorgesehen, die das von einer Laserdiode stammende, primäre Laserstrahlenbündel in die gewünschten Richtungen ablenken. Die Ablenkspiegel zur Erzeugung der insgesamt fünf horizontalen und lotrechten Strahlenbündel sind in einem räumlichen Abstand voneinander im Strahlengang des primären Laserstrahlenbündels angeordnet. Dadurch entsteht für das von den emittierten Laserstrahlenbündeln aufgespannte dreidimensionale Achsensystem ein Nullpunktversatz, weil die lotrechten Strahlenbündel und die horizontalen Strahlenbündel unterschiedliche virtuelle Ursprünge aufweisen. Bislang behelfen sich die Hersteller derartiger Laserrichtgeräte damit, für diesen Nullpunktversatz konstruktiv ein rundes Mass von beispielsweise 20 mm vorzusehen. Bei Messungen mit derartigen Laserrichtgeräten muss der Nullpunktversatz berücksichtigt werden. Dies stellt bei Anwendungen eine nicht unerhebliche Fehlerquelle dar. Die Spiegelanordnung zur Erzeugung der Teilstrahlenbündel aus dem primären Laserstrahlenbündel muss exakt ausgerichtet sein, wodurch der Montagevorgang erschwert wird. Ausserdem weist die bekannte Anordnung von Einzelspiegeln eine relativ grosse Empfindlichkeit gegenüber Erschütterungen auf, was sich insbesondere bei Einsätzen auf der Baustelle nachteilig auswirken kann.

Aufgabe der vorliegenden Erfindung ist es, eine Vorrichtung zu schaffen, die eine Aufspaltung eines primären Lichtstrahlenbündels in Teilstrahlenbündel ermöglicht. Dabei soll ein Nullpunktversatz der aufgespaltenen Teilstrahlenbündel verhindert sein. Die Vorrichtung soll eine einfache Montage, beispielsweise in einem optischen Richtgerät, insbesondere in einem Laserrichtgerät, ermöglichen und dabei einen robusten Aufbau besitzen, damit die Baustellentauglichkeit gewährleistet ist.

Die Lösung dieser Aufgaben besteht in einem Strahlteiler zur Aufspaltung eines Lichtstrahlenbündels in Teilstrahlenbündel mit den im kennzeichnenden Abschnitt des Patentanspruchs 1 angeführten Merkmalen. Bevorzugte Ausführungsvarianten und/oder Weiterbildungen der Erfindung sind Gegenstand der abhängigen Patentansprüche. Der Strahlteiler zur Aufspaltung eines Lichtstrahlenbündels in Teilstrahlenbündel besitzt eine Anzahl von reflektierenden Flächen, die im Strahlengang eines von einer Lichtquelle erzeugten, kollimierten, primären Lichtstrahlenbündels angeordnet sind. Die reflektierenden Flächen sind gegenüber der Ausbreitungsrichtung des primären Lichtstrahlenbündels jeweils um 45° geneigt und spalten das auftreffende primäre Lichtstrahlenbündel unter Erzeugung eines virtuellen kartesischen Achsensystems in senkrecht zueinander verlaufende Teilstrahlenbündel auf. Nach der Erfindung sind wenigstens zwei reflektierende Flächen vorgesehen, die im rechten Winkel zueinander verlaufend, im gleichen Abstand von einem Kollimator angeordnet sind und derart in das primäre Lichtstrahlenbündel ragen, dass für einen Teils des primären Lichtstrahlenbündels ein Strahldurchlass gebildet ist, der im wesentlichen symmetrisch zur optischen Achse des Kollimators liegt.

Durch die erfindungsgemässe Anordnung der reflektierenden Flächen im Strahlengang des primären Lichtstrahlenbündels sind sehr einfach drei, jeweils senkrecht zueinander verlaufende Teilstrahlenbündel erzeugbar. Die von den reflektierenden Flächen erzeugten Teilstrahlenbündel bilden beispielsweise die orhtogonalen y- und z-Achsen. Der ungehindert durchtretende Teil des primären Lichtstrahlenbündels bildet die x-Achse. Das auf diese Art erzeugte kartesische Achsensystem aus Teilstrahlenbündeln besitzt einen gemeinsamen virtuellen Ursprung, der sich aus dem Schnittpunkt der Verlängerung der Teilstrahlenbündel durch die "Auftreffpunkte" des primären Lichtstrahlenbündels auf die reflektierenden Flächen ergibt. Der ungehindert durchtretende Teil des primären Lichtstrahlenbündels passiert den Schnittpunkt. Die Lage des Schnittpunkts entspricht dabei dem Abstand der reflektierenden Flächen vom Kollimator. Ein Nullpunktversatz ist dadurch zuverlässig vermieden. Die rechtwinkelige Anordnung der reflektierenden Flächen im gleichen Abstand vom Kollimator schafft die Vorraussetzung für eine kompakte und robuste Bauweise der optischen Elemente, was die Montage, beispielsweise in einem optischen Richtgerät, erleichtert und die Anfälligkeit des Strahlteilers gegenüber Erschütterungen verringert.

Um unerwünschte Reflexionen und Spiegelungen zu vermeiden und genau definierte Teilstrahlenbündel erzeugen zu können, erweist es sich von Vorteil, wenn eine Vereinzelungseinrichtung vorgesehen ist, um das kollimierte, primäre Lichtstrahlenbündel bereits vor der Aufspaltung in die Teilstrahlenbündel in parallel zueinander verlaufende, primäre Einzelstrahlenbündel aufzuteilen.

In einer Ausführungsvariante der Erfindung ist die Vereinzelungseinrichtung eine zwischen der Lichtquelle und den reflektierenden Flächen angeordnete Lochblende oder dergleichen. Die Lochblende weist dabei Durchgangsöffnungen auf, deren Zahl der Anzahl der reflektierenden Flächen vermehrt um 1 entspricht. Dadurch wird dem Umstand Rechnung getragen, dass neben den, von den reflektierenden Flächen erzeugten Teilstrahlenbündeln auch ein Teil des primären Lichtstrahlenbündels, zur Erzeugung einer der Achsen des kartesischen Achsensystems, unabgelenkt weitergeführt wird. Durch die Lochblende erhält auch dieser Teil des primären Lichtstrahlenbündels einen weitgehend exakt definierten Durchmesser.

In einer konstruktiv sehr einfachen Ausführungsvariante ist die Vereinzelungseinrichtung von lichtabsorbierenden Bereichen gebildet, welche die reflektierenden Flächen beranden und vorzugsweise aufgedampft sind. Bei dieser Ausführungsvariante der Erfindung wird das einfallende Lichtstrahlenbündel unmittelbar vor bzw. unmittelbar am Ort der Ablenkung an den reflektierenden Flächen in räumlich voneinander getrennte, primäre Einzelstrahlenbündel zerlegt.

In einer sehr zweckmässigen Variante der Erfindung weist der Strahlteiler vier reflektierende Flächen auf, die im rechten Winkel zueinander, vorzugsweise im Quadrat, angeordnet sind. Die vier reflektierenden Flächen weisen alle den gleichen Abstand vom Kollimator auf und ragen derart in den primären Lichtstrahl, dass ein Mittenteil des primären Lichtstrahlenbündels einen von den reflektierenden Flächen umrandeten Mittenbereich im wesentlichen ungehindert passieren kann. Die von den reflektierenden Flächen aus dem primären Lichtstrahlenbündel erzeugten vier Teilstrahlenbündel spannen eine Ebene auf, die senkrecht zu dem einfallenden, primären Lichtstahlenbündel verläuft. Dabei erstrecken sich zusammengehörende Teilstrahlenbündel jeweils vom virtuellen Ursprung aus in entgegengesetzte Richtungen. Dadurch werden "positiv' und "negativ' zählende Achsenabschnitte erzeugt. Der den Strahlteiler weitgehend ungehindert passierende Mittenteil des primären Lichtstrahlenbündels bildet, ausgehend vom virtuellen Ursprung, den "positiv" zählenden Abschnitt der dritten Achse des virtuellen kartesischen Achsensystems.

Die bereits erwähnte Montagefreundlichkeit und die Unempfindlichkeit gegenüber Erschütterungen wird noch weiter verbessert, indem die reflektierenden Flächen von den wenigstens bereichsweise verspiegelten Seitenflächen eines im Strahlengang des primären Lichtstrahlenbündels angeordneten, vorzugsweise einstückigen, pyramidenstumpfförmigen optischen Elements gebildet sind. Die Deck- und Grundfläche des einstückigen, pyramidenstumpfförmigen optischen Elements verlaufen planparallel zueinander und sind senkrecht zur Ausbreitungsrichtung des primären Lichtstrahlenbündels ausgerichtet. Ihre Ausbildung ist derart, dass sie einen im wesentlichen ungehinderten Durchtritt eines Mittenteils des primären Lichtstrahlenbündels ermöglichen. Beispielsweise besteht das optische Element zur Gänze aus einem Glaskörper. Die vier Seitenflächen des pyramidenstumpfförmigen Glaskörpers können bereichsweise verspiegelt sein, beispielsweise durch eine Beschichtung mit Aluminium. Im Prinzip ist eine Verspiegelung nicht unbedingt erforderlich, da an den reflektierenden Flächen Totalreflexion erfolgt. Der Glaskörper weist gegenüber der Wellenlänge des primären Lichtstrahlenbündels eine kleine Absorption auf, damit dessen Mittenteil im wesentlichen ungeschwächt den Glaskörper durchtreten kann.

In einer Variante der Erfindung weist das pyramidenstumpfförmige optische Element eine in Ausbreitungsrichtung des primären Lichtstrahlenbündels verlaufende Durchgangsbohrung auf, welche die Deck- und Grundfläche durchsetzt. Da für den Mittenteil des primären Lichtstrahlenbündels eine Durchgangsbohrung vorgesehen ist, kann der optische Körper auch aus einem Material bestehen, das eine grössere Lichtabsorption aufweist oder sogar gänzlich lichtundurchlässig ist.

Für die Anwendung des Strahlteilers, beispielsweise in einem optischen Richtgerät, spielt auch die Reichweite der erzeugten Teilstrahlenbündel eine wichtige Rolle, damit das Gerät auch über grössere Distanzen, wie sie beispielsweise im Bauwesen auftreten, als Ausrichthilfe einsetzbar ist. Dazu wird das primäre Lichtstrahlenbündel mit Vorteil von wenigstens einer Laserdiode erzeugt und durch ein, vorzugsweise eine asphärische Linse umfassendes, Objektiv kollimiert. Das Objektiv ist vor den reflektierenden Flächen und einer gegebenenfalls vorgeschalteten Vereinzelungseinrichtung im Strahlengang des primären Lichtstrahlenbündels angeordnet und weitet das primäre Lichtstrahlenbündel auf den erforderlichen Strahldurchmesser auf. Als besonders vorteilhafte Anwendung des erfindungsgemässen Strahlteilers werden an dieser Stelle die im Bauwesen einsetzbaren optischen Richtgeräte, insbesondere Laserrichtgeräte, erwähnt.

Im folgenden wird die Erfindung unter Bezugnahme auf in den Fig. dargestellte Ausführungsbeispiele näher erläutert. Es zeigen in schematischer und nicht massstabsgetreuer Darstellung:
- Fig. 1: eine optische Einrichtung eines optischen Richtgeräts mit einem erfindungsgemässen Strahlteiler;
- Fig. 2: eine Draufsicht auf den Strahlteiler aus Fig. 1;
- Fig. 3: einen Axialschnitt eines zweiten Ausführungsbeispiels des Strahlteilers; und
- Fig. 4: eine Draufsicht auf den Strahlteiler aus Fig. 3.

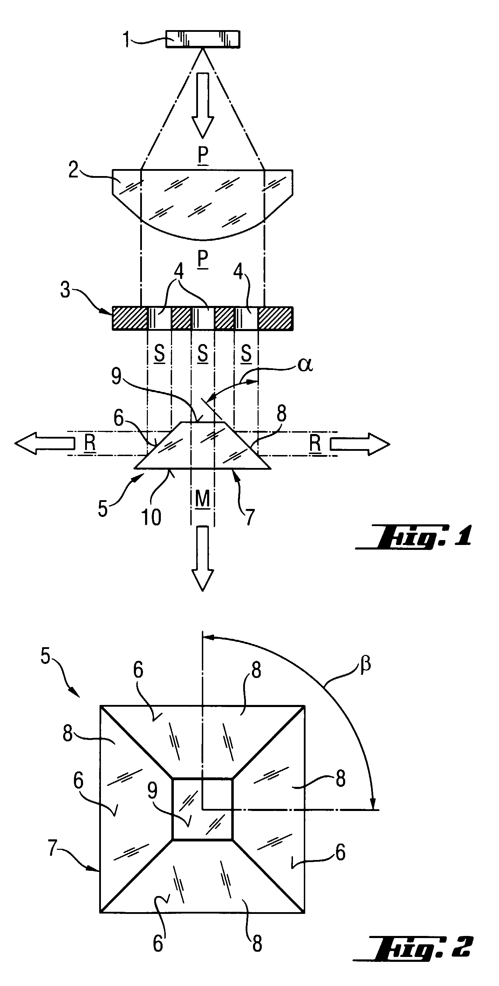

Fig. 1 zeigt eine optische Einrichtung eines optischen Richtgeräts, dessen prinzipieller Aufbau beispielsweise aus der US-A-5,144,487 bekannt ist und für das Verständnis der Erfindung nicht weiter von Belang ist. Ein von einer Lichtquelle 1, beispielsweise von einer Laserdiode, erzeugtes primäres Lichtstrahlenbündel P gelangt zu einem Kollimator 2, welcher das Lichtstrahlenbündel P zu einem Parallelstahlenbündel umformt und im gewünschten Umfang aufweitet. Beispielsweise handelt es sich bei dem Kollimator 2 um ein Kollimatorobjektiv mit asphärischer Linse oder um eine Anordnung von Zylinderlinsen. Das kollimierte primäre Lichtstrahlenbündel P gelangt zu einer Vereinzelungseinrichtung 3, beispielsweise einer Lochblende, mit Durchtrittsöffnungen 4 für das Lichtstrahlenbündel. Der Durchmesser der Durchtrittsöffnungen 4 beträgt beispielsweise etwa 1,5 mm bis etwa 3 mm. Durch die Lochblende 3 wird das primäre Lichtstrahlenbündel P in parallel zueinander verlaufende, scharf voneinander abgegrenzte, primäre Einzelstrahlenbündel S zerlegt. Die primären Einzelstrahlbündel S gelangen schliesslich zu einem im Strahlengang des primären Lichtstrahlenbündels P angeordneten Strahlteiler 5.

Der Stahlteiler 5 ist von reflektierenden Flächen 6 gebildet, die gegenüber der Ausbreitungsrichtung des primären Lichtstrahlenbündels P um einen Winkel a von 45° geneigt angeordnet sind und vom Kollimator 2 den gleichen Abstand aufweisen. Wie aus Fig. 1 und insbesondere auch aus Fig. 2 ersichtlich ist, sind die reflektierenden Flächen 6 an einem optischen Element 7 vorgesehen, das etwa die Form eines Pyramidenstumpfes aufweist und dessen vier Seitenflächen 8 miteinander jeweils einen Winkel β von 90° einschliessen. Vorzugsweise sind die Seitenflächen 8 im Quadrat angeordnet. Die reflektierenden Flächen 6 erstrecken sich gemäss dem dargestellten Ausführungsbeispiel über die gesamten Seitenflächen 8 und sind durch Verspiegelung, beispielsweise durch Beschichtung mit Aluminium, herstellbar. Die Anordnung des Strahlteilers 5 im Strahlengang des primären Lichtstrahlenbündels P ist derart gewählt, dass nach der Vereinzelung durch die Lochblende 3 jeweils ein primäres Einzelstrahlenbündel S auf eine der vier reflektierenden Flächen 6 auftrifft. Durch die 45° Neigung der reflektierenden Flächen 6 wird das auftreffende, primäre Einzelstrahlenbündel S um 90° umgelenkt, um als Teilstrahlenbündel R aus dem Gehäuse des Richtgeräts auszutreten. Die vier reflektierenden Flächen 6 des Strahlteilers 5 erzeugen vier Teilstrahlenbündel R, die jeweils paarweise parallel verlaufen aber die entgegengesetzte Ausbreitungsrichtung aufweisen. Die vier Teilstrahlenbündel R spannen eine Ebene auf, die senkrecht zur Aufbreitungsrichtung des primären Lichtstahlenbündels P verläuft.

Das pyramidenstumpfförmige optische Element 7 ist aus einem gegenüber der Wellenlänge des einfallenden, primären Lichtstrahlenbündels P nur sehr wenig absorbierenden Glas gefertigt und besitzt planparallele Deck- und Grundflächen 9 bzw. 10. Die planparallelen Deck- und Grundflächen 9 bzw. 10 sind senkrecht zur Ausbreitungsrichtung des primären Lichtstrahlenbündels P ausgerichtet. Dadurch kann der Mittenteil M des primären Lichtstrahls P den von den geneigten, reflektierenden Flächen 6 umgebenen Mittenbereich des optischen Elements 7 weitgehend ungehindert passieren. Das optische Element kann auch eine im wesentlichen kegelstumpfförmige Ausbildung besitzen. Die reflektierenden Flächen sind dann beispielsweise als Facetten in die Mantelfläche des Kegelstumpfes eingeschliffen.

Die im Anschluss an den Strahlteiler 5 sich erstreckenden Teilstrahlenbündel R, M bilden ein kartesisches Achsensystem. Die von den reflektierenden Flächen 6 erzeugten Teilstrahlenbündel R stellen die positiven und die negativen Abschnitte zweier orthogonaler Achsen dar. Der ungehindert durchtretende Mittenteil M des primären Lichtstrahlenbündels P bildet die dritte Orthogonalachse. Indem alle reflektierenden Flächen 6 den gleichen Abstand von der Lichtquelle 1 aufweisen, erfolgt auch die Reflexion der einfallenden, primären Einzelstrahlenbündel S in der gleichen Ebene. Dadurch weisen die reflektierten Teilstrahlenbündel R den selben virtuellen Ursprung im Zentrum des optischen Elements 7 auf. Dieser virtuelle Ursprung wird auch vom ungehindert durchtretenden Mittenteil M des primären Strahlenbündels P passiert. Somit besitzen alle fünf aus dem Strahlteiler 5 austretenden Teilstrahlenbündel R, M den selben virtuellen Ursprung und spannen ein kartesisches Achsensystem auf, das keinen Nullpunktversatz aufweist.

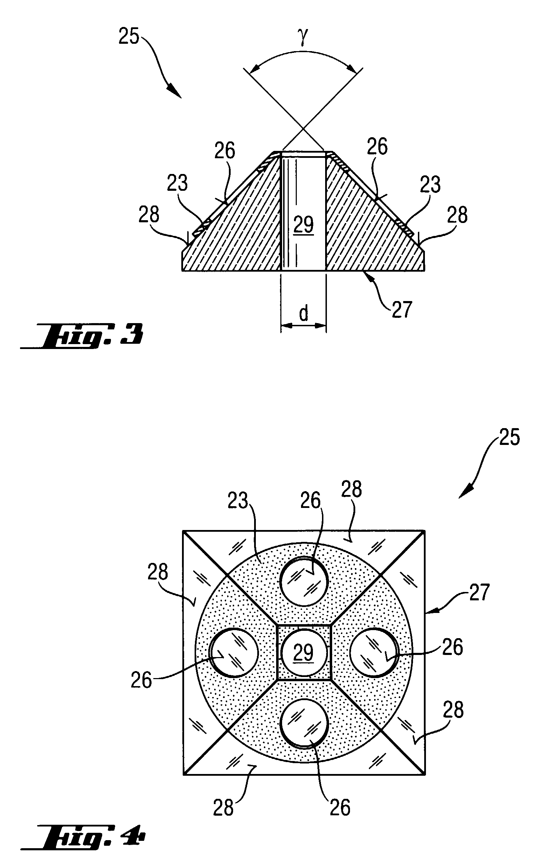

Das in Fig. 3 im Axialschnitt und in Fig. 4 in Draufsicht dargestellte zweite Ausführungsbeispiel des Strahlteilers trägt gesamthaft das Bezugszeichen 25. Der Strahlteiler 25 ist wiederum von einem pyramidenstumpfförmigen optischen Element 27 mit vier, vorzugsweise im Quadrat angeordneten Seitenflächen 28 gebildet. Die Seitenflächen 28 sind gegenüber der Achse des optischen Elements um 45° geneigt und schliessen miteinander einen Spitzenwinkel γ von 90° ein. Das optische Element 27 kann aus einzelnen Segmenten zusammengesetzt oder einstückig aufgebaut sein. Die reflektierenden Flächen 26 sind durch teilweise Verspiegelung der Seitenflächen 28 hergestellt und erstrecken sich nur über einen Teilbereich der Seitenflächen 28. Ein grosser Teil ist mit einer lichtundurchlässigen Beschichtung 23 versehen, die zur Vereinzelung und räumlichen Abgrenzung des auf den Strahlteiler 25 auftreffenden, kollimierten primären Lichtstrahlenbündels dient. Bei einem derartig ausgebildeten Strahlteiler 25 kann eine gesonderte Vereinzelungseinrichtung, beispielsweise eine Lochblende, entfallen. Die Aufspaltung und räumliche Abgrenzung des primären Lichtstrahlenbündels erfolgt unmittelbar am Ort der Reflexion, auf den reflektierenden Flächen 26 selbst. Der von den Seitenflächen 28 bzw. den von den lichtundurchlässigen Bereichen 23 begrenzten, reflektierenden Flächen 26 umschlossene Mittenbereich des optischen Elements 27 ist mit einer Durchgangsbohrung 29 versehen, die ein ungehindertes Passieren des Mittenteils des primären Lichtstrahlenbündels erlaubt. Der Durchmesser d der Durchgangsbohrung 29 beträgt z.B. etwa 1,5 mm bis etwa 3 mm. Die von den lichtundurchlässigen Bereichen 23 umgebenen reflektierenden Flächen weisen etwa die gleiche Grösse auf. Das optische Element 27 kann aus einem Material mit grösserer Absorption bestehen oder gänzlich lichtundurchlässig sein.

Die Erfindung ist am Beispiel von Strahlteilern mit vier reflektierenden Flächen erläutert worden. Zur Erzeugung eines kartesischen Achsensystems reichen auch bereits drei Teilstrahlenbündel aus. Es versteht sich daher, dass der Strahlteiler auch nur zwei reflektierende Flächen aufweisen kann, die senkrecht zueinander angeordnet und gegenüber dem einfallenden, kollimierten primären Lichtstrahlenbündel um 45° geneigt sind. Die reflektierenden Flächen sind im gleichen Abstand vom Kollimator angeordnet und ragen derart in den Strahlengang des primären Lichtstrahlenbündels, dass ein Teilbereich des primären Lichtstrahlenbündels ungehindert passieren kann. Die auf diese Weise erzeugten Teilstrahlenbündel schliessen miteinander jeweils einen Winkel von 90° ein und besitzen einen gemeinsamen virtuellen Ursprung.

## Patentansprüche

1. Strahlteiler zur Aufspaltung eines Lichtstrahlenbündels in Teilstrahlenbündel mit einer Anzahl von im Strahlengang eines von einer Lichtquelle (1) erzeugten, kollimierten primären Lichtstrahlenbündels (P) angeordneten, reflektierenden Flächen (6; 26), die gegenüber der Ausbreitungsrichtung des primären Lichtstrahlenbündels (P) jeweils um 45° geneigt sind und das auftreffende primäre Lichtstrahlenbündel (P) in senkrecht zueinander verlaufende Teilstrahlenbündel (R) aufspalten, **dadurch gekennzeichnet,** dass wenigstens zwei reflektierende Flächen (6; 26) vorgesehen sind, die im rechten Winkel zueinander verlaufend, im gleichen Abstand von einem Kollimator (2) angeordnet sind und derart in das primäre Lichtstrahlenbündel (P) ragen, dass für einen Teil (M) des primären Lichtstrahlenbündels (P) ein Strahldurchlass (9, 10; 29) gebildet ist, der im wesentlichen symmetrisch zur optischen Achse des Kollimators (2) liegt.

2. Strahlteiler nach Anspruch 1, dadurch gekennzeichnet, dass eine Vereinzelungseinrichtung (3; 23) vorgesehen ist, um das kollimierte, primäre Lichtstrahlenbündel (P) vor der Aufspaltung in Teilstrahlenbündel (R, M) in parallel zueinander verlaufende, primäre Einzelstrahlenbündel (S) aufzuteilen.

3. Strahlteiler nach Anspruch 2, dadurch gekennzeichnet, dass die Vereinzelungseinrichtung eine zwischen der Lichtquelle (1) und den reflektierenden Flächen (6) angeordnete Lochblende (3) oder dergleichen ist, deren Zahl an Durchgangsöffnungen (4) der Anzahl der reflektierenden Flächen (6) vermehrt um 1 entspricht.

4. Strahlteiler nach Anspruch 2, dadurch gekennzeichnet, dass die Vereinzelungseinrichtung von lichtabsorbierenden Bereichen (23) gebildet ist, welche die reflektierenden Flächen (26) beranden und vorzugsweise aufgedampft sind.

5. Strahlteiler nach einem der vorangehenden Ansprüche, dadurch gekennzeichnet, dass vier reflektierende Flächen (6; 26) vorgesehen sind, die im rechten Winkel zueinander, vorzugsweise im Quadrat, angeordnet sind, alle den gleichen Abstand vom Kollimator (2) aufweisen und derart in das primäre Lichtstrahlenbündel (P) ragen, dass ein Mittenteil (M) des primären Lichtstrahlenbündels einen von den reflektierenden Flächen (6; 26) umrandeten Mittenbereich im wesentlichen ungehindert passieren kann.

6. Strahlteiler nach Anspruch 5, dadurch gekennzeichnet, dass die reflektierenden Flächen (6) von den wenigstens bereichsweise verspiegelten Seitenflächen (8) eines im Strahlengang des primären Lichtstrahlenbündels (P) angeordneten, vorzugsweise einstückigen, pyramidenstumpfförmigen optischen Elements (7) gebildet sind, dessen Deck- und Grundfläche (9, 10) planparallel zueinander und senkrecht zur Ausbreitungsrichtung des primären Lichtstrahlenbündels (P) ausgerichtet sind und den im wesentlichen ungehinderten Durchtritt des Mittenteils (M) des primären Lichtstrahlenbündels (P) ermöglichen.

7. Strahlteiler nach Anspruch 6, dadurch gekennzeichnet, dass das pyramidenstumpfförmige optische Element (27) eine in Ausbreitungsrichtung des primären Lichtstrahlenbündels (P) verlaufende Durchgangsbohrung (29) aufweist, welche die Deck- und Grundfläche durchsetzt.

8. Strahlteiler nach einem der vorangehenden Ansprüche, dadurch gekennzeichnet, dass das primäre Lichtstrahlenbündel (P) von wenigstens einer Laserdiode (1) erzeugt und durch ein, vorzugsweise eine asphärische Linse umfassendes, Objektiv (2) kollimiert wird, welches vor den reflektierenden Flächen (6; 26) und einer gegebenenfalls vorgeschalteten Vereinzelungseinrichtung (3; 23) im Strahlengang des primären Lichtstrahlenbündels (P) angeordnet ist.

9. Optisches Richtgerät, insbesondere Laserrichtgerät, gekennzeichnet durch einen Strahlteiler gemäss einem der vorangehenden Ansprüche.
